# EUROPEAN PATENT APPLICATION

(11) **EP 4 699 798 A1**
(43) Date of publication of application: **25.02.2026**
(21) Application number: 25197141.2
(22) Date of filing: 20.08.2025
(51) Int. Cl.: B32B 7/12, B32B 27/20, B32B 27/32, B32B 7/035

(54) **CROSS-LAMINATED FILM WITH MODIFIED PRINT SURFACE**

(30) Priority: 21.08.2024 US 202463685508 P; 19.08.2025 US 202519303623
(71) Applicant: Illinois Tool Works Inc., Glenview, IL 60025 (US)
(72) Inventor: RANCICH, Michael Joseph, Glenview, 60025 (US); JOOS, Marc, Glenview, 60025 (US); VAN LOON, Bernard, Glenview, 60025 (US)
(74) Representative: HGF

(57) **Abstract**

A film and method of improving printing on the film. The film is a cross-laminate of an outer film layer including a high-density polyethylene partially impregnated with a filler such as calcium carbonate and a second film layer cross-laminated to the outer layer and including a high-density polyethylene, optionally with the filler. An adhesive layer is disposed between, and adhered together, the outer film layer and the second film layer. All layers are desirably polyethylene and coextruded. The outer surface including the filler is corona treated for improving printing.

## Description

### FIELD OF THE INVENTION

This invention is directed to a cross-laminated film having a printable surface. The film can be used in various industries for various purposes.

### SUMMARY OF THE INVENTION

The invention generally relates to a cross-laminated HOPE film with improved surface printability, on one or optionally both sides of the film, for providing a durable printing substrate. The film is useful for various imaging and identification applications including, without limitation, automotive, food and pharmaceutical uses.

The invention includes a film of a cross-laminate of two separate outer film layers, preferably two bias cut films, each including a high-density polyethylene polymer. At least one of the two separate film layers is at least partially impregnated with a filler, such as calcium carbonate, desirably at an outer printable surface. The film with filler can also be optionally corona treated at the outer film surface, to further promote direct printing on the surface. In embodiments, the filler beneficially enhances corona treatment. An adhesive layer is disposed between, and adheres together, the two separate outer film layers. The adhesive layer can include a polyethylene polymer material, such as a blend of high-density polyethylene and low-density polyethylene.

Desirably, the two separate outer film layers (e.g., bias cut films) are mechanically oriented. The mechanically oriented two separate outer film layers are laminated at an angle of 40 to 60 degrees to the machine direction. The two separate outer film layers are at an angle between 80 and 120 degrees to each other.

In embodiments of the invention, each of the two separate outer film layers comprises more than one polymer layer, and desirably three coextruded layers. The calcium carbonate is only in an outermost facing polymer layer of one or both of the two separate coextruded outer film layers. Each of the outer facing coextruded polymer layers is desirably less than 30% of the thickness of the corresponding coextruded outer film ply. In some embodiments, the film layer(s) impregnated with the calcium carbonate comprise(s) 40%-50% by weight calcium carbonate.

The outer film layer(s) impregnated with calcium carbonate is adapted to receive a printing ink and allow direct printing without additional surface primers, chemicals, etc. The surface(s) of the film impregnated with the calcium carbonate can also be corona treated to improve printing. Any suitable corona treatment and printing process can be used.

The invention further includes a film formed of a cross-laminate of an outer film layer including a high-density polyethylene partially impregnated with calcium carbonate and a second film layer cross-laminated to the outer layer and including a high-density polyethylene. An adhesive layer is disposed between, and adheres together, the outer film layer and the second film layer. The adhesive layer again can be a polyethylene layer between the outer film layer and the second film layer.

At least the outer film layer can be further adapted to receive a printing ink, such as by a corona treatment to improve printing. The second film can optionally also be impregnated with calcium carbonate and further corona treatment and printing.

In embodiments, the film has a thickness of 75 to 215 microns, and the outer film layer or ply, which is impregnated with calcium carbonate (40-50% by weight), has a thickness of 30 to 75 microns.

The films of this invention can include additional interior plies (e.g., additional bias cut films) without fillers. The additional layers can be the same or slightly different HDPE layers discussed above, and be adhered with similar adhesive layers. All layers are again desirably coextruded. As an example, cross-laminated films having a thickness of 165 to 215 microns typically have four oriented, bias cut films laminated together.

The invention further includes a method of coextruding layers and plies to form the film. In addition, methods of this invention include corona treating at least one outer film surface and printing directly on the treated surface.

Other objects and advantages will be apparent to those skilled in the art from the following detailed description taken in conjunction with the appended claims and drawings.

### BRIEF DESCRIPTION OF THE DRAWINGS

FIG. 1 shows a cross-laminate film according to one embodiment of this invention.
FIG. 2 representatively shows a corona treatment according to one embodiment of this invention.
FIG. 3 shows a cross-laminate film according to one embodiment of this invention.
FIG. 4 shows a cross-laminate film according to one embodiment of this invention.
FIG. 5 shows a cross-laminate film according to one embodiment of this invention.

### DETAILED DESCRIPTION OF THE INVENTION

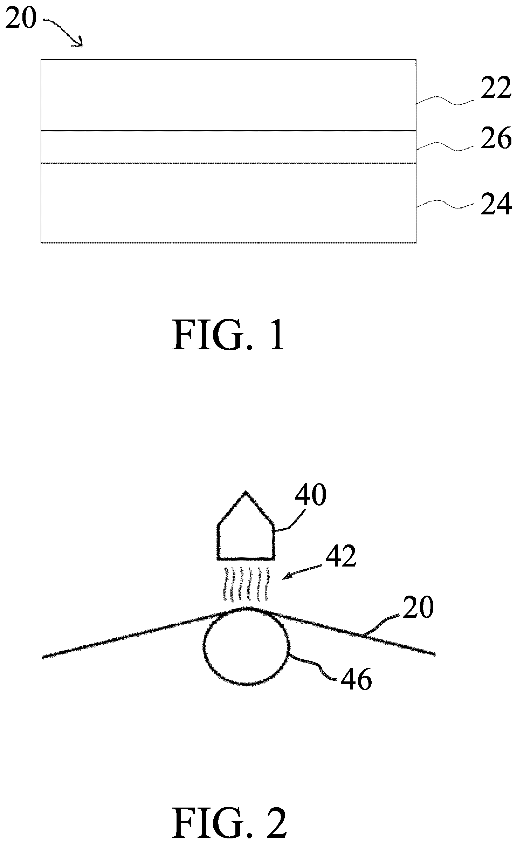

FIG. 1 generally shows a film 20 of two cross-laminated layers (e.g., two cross-laminated bias cut films) according to embodiments of this invention. The film 20 includes a first oriented ply, film layer 22, cross-laminated to a second oriented ply, film layer 24, via an adhesive laminate layer 26. In preferred embodiments, each of the film layers 22 and 24 include or are formed of a high-density polyethylene, and each is preferably a bias cut film layer. The adhesive laminate layer 26 can be a polyethylene, such as a blend of high-density polyethylene (e.g., 930 to 970 kg/m³) and low-density polyethylene (e.g., 917 to 930 kg/m³). Various additives, such as UV stabilizers and colorants (e.g., titanium dioxide) can be used as needed.

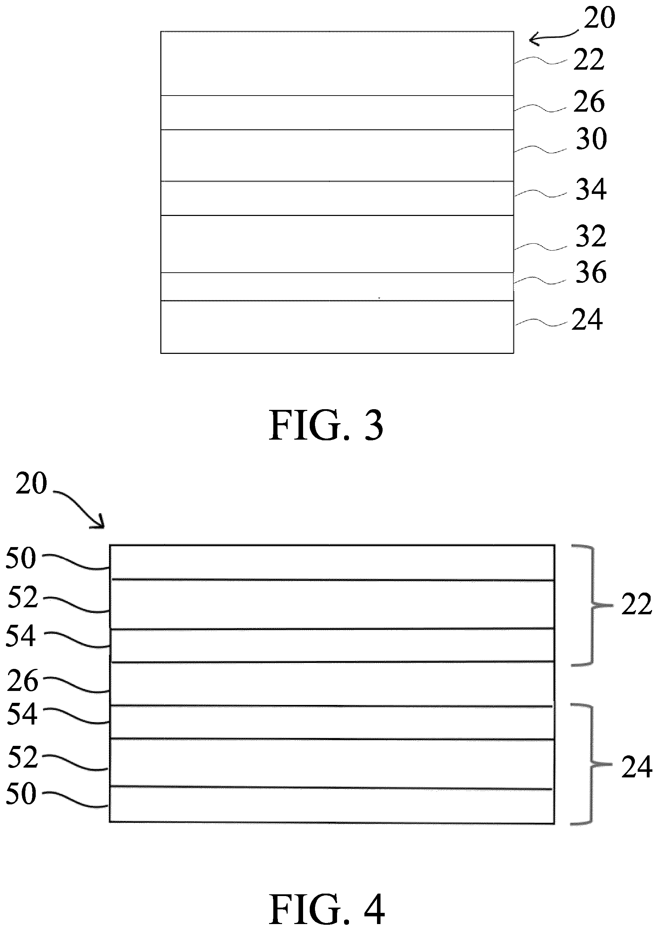

The film layers 22 and 24 are mechanically oriented and laminated at an angle of 40 to 60 degrees to the machine direction, whereby the two separate outer film layers are at an angle between 80 and 120 degrees to each other. The thickness of the cross-laminated film can vary depending on need, and/or the print performances and print techniques used. Depending on the required end thickness, more than two orientated film layers can be used. FIG. 3 shows an optional four layer structure film 20, with additional plies, namely film layers 30 and 32, and additional adhesive laminate layers 34 and 36.

Film layer 24 is modified with a material to improve printability. In embodiments, at least a portion of film layer 24 is impregnated with calcium carbonate or similar materials. The calcium carbonate is preferably located near an outer surface of the film layer 24, such as in an outermost co-extrusion layer. The modified surface layer improves printing alone, and can be used in combination with an optional corona treatment, by improving adhesion of ink without applying a special primer or coating layer on top of the film. This eliminates the need for an additional coating step to upgrade the regular film for print applications. Additionally the opposing surface of film layer 22 can also be modified/impregnated with calcium carbonate to promote printing on both surfaces.

In preferred embodiments, one or both of the film layers 22 and 24 are bias cut films. As an example, the HDPE film is extruded via a blown film process to form a tube. In embodiments, the blown film has several co-extruded layers, such as with an outer layer including the calcium carbonate filler. The tube is cooled and collapsed into a flat tube, and then it is fed into an orienter. During orientation, the film is stretched in the machine direction aligning the polyethylene molecules. The resulting film is strong in the machine direction. The oriented tube is then annealed and wound. In a spiral cutting step, the flattened, oriented tube in unrolled, rotated and re-inflated to form a round tube. As the film is fed forward and rotated about a mandrel, it is cut on a bias (e.g., 45°) and wound. The resulting film orientation is desirably at approximately 45 degrees to the machine direction. Finished spiral cut rolls can then be fed through and laminated with an extruder with their orientation directions crossed at, for example, 90°.

FIG. 2 representatively shows film 20 during an optional corona treatment. The film can be passed through any suitable corona treater 40, which provides a corona discharge to create ionized air 42 and alter the film surface for improved printing. As illustrated, the cross-laminated film 20 is passed over a roller 46 aligned with the corona treater 40, such as a silicon roller. Any suitable corona treatment and/or printing apparatus can be used, such as electrode-based or laser-based devices. Exemplary printing techniques include flexographic printing and thermal transfer. The film can be corona treated on both exterior layers.

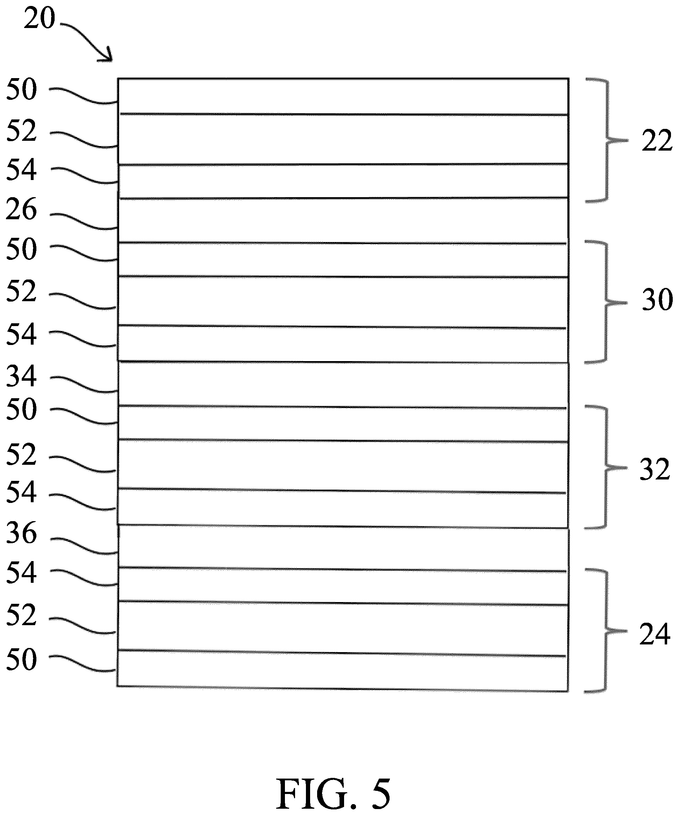

In embodiments of this invention, each of the oriented plies, e.g., film layers 22, 24, 30, and/or 32, are multilayer coextruded oriented bias cut films. FIGS. 4 and 5 illustrate exemplary structures. FIG. 4 shows film 20 with the coextruded materials or layers present in each of film layers/plies 22 and 24. Outer bias cut film 22 includes a first material or polymer extrusion layer 50 (sometimes referred to as a skin layer), a second material or polymer extrusion layer 52 (sometimes referred to as a core layer), and a third material or polymer extrusion layer 54 (a second skin layer). In embodiments, only the outer extrusion material/layer 50 includes or is impregnated with the filler (e.g., CaCO₃). Bias cut film 24 can include an identical or similar structure, with the outer layer 50 optionally including calcium carbonate depending on printing needs. FIG. 5 shows optional bias cut films 30 and 32, including material layers 50-54, with no filler included.

Each of the layers 50-54 include a high density polyethylene. Each skin layer 50 and 54 is approximately 15 to 30% of the total ply thickness, and the core layer 52 is desirably 40 to 70% of the total ply thickness. The calcium carbonate or other filler desirably accounts for 30 to 70% by weight of the skin layer, more desirably 35 to 60% by weight. The CaCO₃ is typically added in the form of a concentrate with a polyethylene carrier resin. The concentrate can contain between 30 and 85% CaCO₃. Exemplary coextruded bias cut films are detailed below, without limitation.

### Modified Oriented Ply (e.g., Layer 22 and optionally Layer 24)

| **Layer 34µ** | **% of Total** | **Layer Composition** | **% of Layer** |
|---|---|---|---|
| A (skin layer) | 25% | HDPE | 97% |
| | | TiO2, UV | 3% |
| | | Other | |
| B (core layer) | 50% | HDPE | 97% |
| | | TiO2, UV | 3% |
| | | Other | |
| C (skin layer - print surface) | 25% | HDPE | 52% |
| | | TiO2, UV | 3% |
| | | CaCO3 Concentrate | 45% |

| **Layer 46µ** | **% of Total** | **Layer Composition** | **% of Layer** |
|---|---|---|---|
| A (skin layer) | 27.3% | HDPE | 97% |
| | | TiO2, UV | 3% |
| | | Other | |
| B (core layer) | 54.5% | HDPE | 97% |
| | | TiO2, UV | 3% |
| | | Other | |
| C (skin layer - print surface) | 18.2% | HDPE | 52% |
| | | TiO2, UV | 3% |
| | | CaCO3 Concentrate | 45% |

### Standard Oriented Ply (e.g., Layers 24, 30 and 32)

| **Layer all thicknesses** | **% of Total** | **Layer Composition** | **% of Layer** |
|---|---|---|---|
| A (skin layer) | 25% | HDPE | 97% |
| | | TiO2, UV | 3% |
| | | Other | |
| B (core layer) | 50% | HDPE | 97% |
| | | TiO2, UV | 3% |
| | | Other | |
| C (skin layer - laminated in | 25% | HDPE | 97% |
| | | TiO2, UV | 3% |
| | | Other | |

Exemplary ply thickness are shown below.

| Layer | Thickness | Material |
|---|---|---|
| Modified orientated ply | 34µ / 46µ / 58µ / 71µ | HDPE / CaCO3 |
| Laminant adhesive layer | 10µ +/- 5µ | HDPE / LDPE |
| Orientated ply | 34µ / 46µ / 58µ / 71µ | HDPE |

Thus the invention provides an improved film surface for printing. By incorporating the filler in just the outer polymer layer of the film, the benefits of improved printing can be added, while still maintaining the superior strength properties and exceptional tear and impact resistance in the films.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

Certain embodiments of the invention are described in the following clauses:
Clause 1. A film, comprising a cross-laminate of:
   two separate outer film layers each comprising a high-density polyethylene, and at least one of the two separate film layers is at least partially impregnated with calcium carbonate; and
   an adhesive layer disposed between, and adhering together, the two separate outer film layers.
Clause 2. The film according to Clause 1, wherein the adhesive layer comprises polyethylene.
Clause 3. The film according to Clause 2, wherein the adhesive layer is a blend of high-density polyethylene and low-density polyethylene.
Clause 4. The film according to Clause 1, wherein each of the two separate outer film layers is a mechanically oriented bias cut film.
Clause 5. The film according to Clause 4, wherein the mechanically oriented bias cut films are laminated at an angle of 40 to 60 degrees to the machine direction, whereby the two separate outer film layers are at an angle between 80 and 120 degrees to each other.
Clause 6. The film according to Clause 1, wherein each of the two separate outer film layers comprises coextruded polymer materials.
Clause 7. The film according to Clause 6, wherein each of the two separate outer film layers comprises more than one coextruded polymer material, and the calcium carbonate is only in an outer facing coextruded polymer material.
Clause 8. The film according to Clause 7 where the outer facing coextruded polymer material is less than 30% of the thickness of the corresponding one of the two separate outer film layers.
Clause 9. The film according to Clause 1, wherein the at least one of the two separate outer film layers impregnated with calcium carbonate is adapted to better receive a printing ink.
Clause 10. The film according to Clause 9, wherein the at least one of the two separate outer film layers impregnated with the calcium carbonate is corona treated to improve printing.
Clause 11. The film according to Clause 7, wherein outer facing polymer layer impregnated with the calcium carbonate comprises 40%-50% by weight calcium carbonate.
Clause 12. The film according to Clause 1, wherein the cross-laminated film has a thickness of 75 to 215 microns, and the at least one of the two separate film layers impregnated with calcium carbonate has a thickness of 30 to 75 microns.
Clause 13. A film, comprising a cross-laminate of:
   an outer bias cut film including a high-density polyethylene partially impregnated with calcium carbonate;
   a second bias cut film cross-laminated to the outer bias cut film and including a high-density polyethylene.
Clause 14. The film according to Clause 13, wherein the adhesive layer comprises a polyethylene layer between the outer film layer and the second film layer.
Clause 15. The film according to Clause 13, wherein the outer bias cut film is adapted to receive a printing ink.
Clause 16. The film according to Clause 15, wherein the outer bias cut film is corona treated to improve printing.
Clause 17. The film according to Clause 13, wherein the second bias cut film is impregnated with calcium carbonate.
Clause 18. The film according to Clause 13, wherein the cross-laminated film has a thickness of 75 to 215 microns, and the outer bias cut film has a thickness of 30 to 75 microns.
Clause 19. The film according to Clause 13, further comprising a second cross-laminate of:
   a third bias cut film including a high-density polyethylene partially; and
   a fourth bias cut film cross-laminated to the third bias cut film and including a high-density polyethylene;
   wherein the second cross laminate is adhered to the second bias cut film.
Clause 20. A method of printing on a surface of a film according to Clause 1, the method comprising:
   corona treating a surface of the outer bias cut film impregnated with the calcium carbonate particles; and
   printing on the corona treated surface.

## Claims

1. A film, comprising a cross-laminate of:
two separate outer film layers each comprising a high-density polyethylene, and at least one of the two separate film layers is at least partially impregnated with calcium carbonate; and
an adhesive layer disposed between, and adhering together, the two separate outer film layers.

2. The film according to Claim 1, wherein the adhesive layer comprises polyethylene, and optionally
wherein the adhesive layer is a blend of high-density polyethylene and low-density polyethylene.

3. The film according to Claim 1 or Claim 2, wherein each of the two separate outer film layers is a mechanically oriented bias cut film, and optionally
wherein the mechanically oriented bias cut films are laminated at an angle of 40 to 60 degrees to the machine direction, whereby the two separate outer film layers are at an angle between 80 and 120 degrees to each other.

4. The film according to any one of Claims 1 to 3, wherein each of the two separate outer film layers comprises coextruded polymer materials.

5. The film according to Claim 4, wherein each of the two separate outer film layers comprises more than one coextruded polymer material, and the calcium carbonate is only in an outer facing coextruded polymer material.

6. The film according to Claim 5 where the outer facing coextruded polymer material is less than 30% of the thickness of the corresponding one of the two separate outer film layers.

7. The film according to any one of Claims 1 to 6, wherein the at least one of the two separate outer film layers impregnated with calcium carbonate is adapted to better receive a printing ink, and optionally
wherein the at least one of the two separate outer film layers impregnated with the calcium carbonate is corona treated to improve printing.

8. The film according to Claim 5, wherein outer facing polymer layer impregnated with the calcium carbonate comprises 40%-50% by weight calcium carbonate.

9. The film according to any one of Claims 1 to 8, wherein the cross-laminated film has a thickness of 75 to 215 microns, and the at least one of the two separate film layers impregnated with calcium carbonate has a thickness of 30 to 75 microns.

10. A film, comprising a cross-laminate of:
an outer bias cut film including a high-density polyethylene partially impregnated with calcium carbonate;
a second bias cut film cross-laminated to the outer bias cut film and including a high-density polyethylene.

11. The film according to Claim 10, wherein the adhesive layer comprises a polyethylene layer between the outer film layer and the second film layer.

12. The film according to Claim 10 or Claim 11, wherein the outer bias cut film is adapted to receive a printing ink, and optionally
wherein the outer bias cut film is corona treated to improve printing.

13. The film according to any one of Claims 10 to 12, wherein the second bias cut film is impregnated with calcium carbonate, and/or
wherein the cross-laminated film has a thickness of 75 to 215 microns, and the outer bias cut film has a thickness of 30 to 75 microns.

14. The film according to any one of Claims 10 to 13, further comprising a second cross-laminate of:
a third bias cut film including a high-density polyethylene partially; and
a fourth bias cut film cross-laminated to the third bias cut film and including a high-density polyethylene;
wherein the second cross laminate is adhered to the second bias cut film.

15. A method of printing on a surface of a film according to any one of Claims 1 to 14, the method comprising:
corona treating a surface of the outer bias cut film impregnated with the calcium carbonate particles; and
printing on the corona treated surface.
